Europäisches Patentamt

European Patent Office

Office européen des brevets

(11) Publication number: **0 387 078 B1**

(12) **EUROPEAN PATENT SPECIFICATION**

(45) Date of publication of patent specification: **11.01.95** (51) Int. Cl.6: **A01N 25/18**, A01N 53/00,
//(A01N53/00,43:32)

(21) Application number: **90302523.7**

(22) Date of filing: **09.03.90**

(54) **Composite insect-proofing agent, insect-proofing method and package thereof.**

(30) Priority: **09.03.89 JP 55062/89**

(43) Date of publication of application:
**12.09.90 Bulletin 90/37**

(45) Publication of the grant of the patent:
**11.01.95 Bulletin 95/02**

(84) Designated Contracting States:
**DE ES FR GB IT**

(56) References cited:
**EP-A- 0 269 292**
**US-A- 3 364 105**
**US-A- 4 123 525**

**CENTRAL PATENTS INDEX, BASIC AB-
STRACTS JOURNAL, section C, week 8623,
30th July1986, accession no. 86-147734/23,
Derwent Publications, Ltd, London, GB;**

**PATENT ABSTRACTS OF JAPAN, vol. 11, no.
268 (C-444)[2715], 29th August 1987,page 111
C 444; & JP-A-62 072 601 (OSAKA SEIYAKU
K.K.) 03-04-1987 (Cat.**

(73) Proprietor: **MITSUBISHI GAS CHEMICAL COM-
PANY, INC.
5-2, Marunouchi 2-chome
Chiyoda-Ku
Tokyo, 100 (JP)**

(72) Inventor: **Takeda, Mutsuhiko
19-3 Kanamachi 5-chome
Katsushika-ku,
Tokyo (JP)**
Inventor: **Kakuda, Minoru
14-6, Tokiwadaira-Jin'yamae
Matsudo-shi,
Chiba-ken (JP)**
Inventor: **Shimpo, Masafumi
68-491, Toyofuta
Kashiwa-shi,
Chiba-ken (JP)**
Inventor: **Takahashi, Toshie
111, Toyama-cho,
Nijuseikigaoka
Matsudo-shi,
Chiba-ken (JP)**

Rank Xerox (UK) Business Services
(3.10/3.09/3.3.3)

PATENT ABSTRACTS OF JAPAN, vol. 12, no. 275 (C-516)[3122], 29th July 1988;& JP-A-63 054 307 (IDEMITSU PETROCHEM. CO., LTD) 08-03-1988

74 Representative: **Cresswell, Thomas Anthony et al**
**J.A. KEMP & CO.**
**14 South Square**
**Gray's Inn**
**London WC1R 5LX (GB)**

**Description**

The present invention relates to a composite insect-proofing agent and insect-proofing method. More particularly, the present invention relates to a composite insect-proofing agent having an excellent effect on controlling insects harmful to clothes, and an insect control method using this composite insect-proofing agent. Moreover, the present invention relates to an insect-proofing agent package where the two effective ingredients volatilize or sublime at a ratio which substantially corresponds to the combination ratio of the two ingredients.

Subliming substances such as camphor, naphthalene and p-dichlorobenzene have heretofore been used as insect-proofing agent for clothes.

However, camphor and naphthalene have insufficient effect in controlling insects harmful to clothes, such as clothes moths and carpet beetle, and the use of p-dichlorobenzene raises problems of toxicity and environmental pollution, it is required to reduce the amount of this chemical used.

Separately, insect-proofing agents comprising a pyrethroid chemical represented by (RS)-1-ethynyl-2-methylpent-2-enyl(1R)-cis,trans-chrysanthemate (hereinafter referred to as "empenthrin") have been developed and marketed.

However, the insect-proofing action of pyrethroid is not regarded as being sufficient in practice.

Furthermore, an insect-proofing agent comprising empenthrin and a subliming substance such as p-dichlorobenzene, naphthalene, camphor or 2,4,6-triisopropyl-1,3,5-trioxane is known (see Japanese Unexamined Patent Publication No. 61-83102 and Japanese Unexamined Patent Publication No. 62-72601). Since these subliming substances have a higher vapor pressure than empenthrin and have a high permeability to the packaging material, it is impossible to maintain a constant mixing ratio between the subliming substance and empenthrin. when 2,4,6-triisopropyl-1,3,5-trioxane is used as the subliming substance, the insect-proofing action is weak. In the foregoing patent publications, however, it is not taught or suggested that trioxane is used in combination with empenthrin.

We previously found that an insect-proofing agent comprising 1,3,5-trioxane (hereinafter referred to as "trioxane") as the active ingredient has a high insect-proofing effect (see Japanese Unexamined Patent Publication No. 63-115802). Even if trioxane is used singly, the effect of controlling insects harmful to clothes can be attained. If this insect-proofing effect can be enhanced, the amount of trioxane used can be reduced.

It is a primary object of the present invention to provide a composite insect-proofing agent showing a higher insect-controlling effect, a higher insect harm-preventing effect and an insecticidal or repellent effect to insects harmful to clothes than the effects attained when respective ingredients are independently used, and an insect control method using this composite insect-proofing agent.

An object of the present invention is to provide a composite insect-proofing agent exerting an excellent insecticidal effect when a small amount is used, and an insect proofing method using this composite insect-proofing agent.

Still another object of the present invention is to provide an insect-proofing agent package in which a plurality of ingredients of the composite insect-proofing agent volatilize or sublimate at a ratio which substantial corresponds to the mixing ratio of the ingredients and the synergistic insect-proofing effect by a plurality of the ingredients therefore can be manifested most efficiently, and the effective life of the composite insect-proofing agent can be prolonged.

In accordance with one aspect of the present invention, there is provided a composite insect-proofing product comprising trioxane and empenthrin, which product releases a synergistic mixture of trioxane and empenthrin.

In accordance with another aspect of the present invention, there is provided an insect proofing method which comprises releasing trioxane and empenthrin, as the active ingredients, into an atmosphere (where insects to be controlled are present).

Other aspects of the invention are derived in the claims.

In accordance with still another aspect of the present invention, there is provided an insect-proofing agent package comprising a packaging material comprising an ethylene polymer film having many gas-permeable openings or a laminate film comprising said ethylene polymer film and a porous substrate and a composite insect-proofing agent comprising trioxane and empenthrin in combination as the active ingredients, which is contained within the packaging material.

Fig. 1 is a sectional view showing a holder for trioxane and empenthrin in different preparation forms contained in different packages, respectively.

Fig. 2 is a sectional view showing a package containing trioxane and empenthrin in different preparation forms in one package.

3

Fig. 3 is a sectional view showing a package in which a homogeneous mixture of trioxane and empenthrin is contained in one package.

Fig. 4 is a sectional view showing a package in which trioxane and empenthrin are contained in the form of liquid-supporting solid particles in one package.

Fig. 5 is a sectional view showing a package in which an insect-proofing agent comprising trioxane and empenthrin is double-packaged.

Detailed Description of the Preferred Embodiments

In the present invention, trioxane (1,3,5-trioxane) and empenthrin [(RS)-1-ethynyl-2-methylpent-2-enyl-(1R)-cis,trans,chrysanthemate] are used as the active ingredients. It is known that trioxane and empenthrin independently exert insect-proofing effects, when used singly. However, it is quite surprising that when they are used in combination, there can be attained a much higher insect-proofing effect than the effect attained when they are used singly.

In the present invention, by "releasing trioxane and empenthrin into an atmosphere", it is meant that they are simultaneously made present in such a large space that the vapor of trioxane and the vapor of empenthrin are mingled with each other. Practically, the interior of, for instance, cabinets, drawers, wardrobes and wardrobe warehouses represent such an atmosphere. The atmosphere can be an open space, so far as vapors of trioxane and empenthrin are mingled with each other.

In the present invention, the combination of trioxane and empenthrin as the effective ingredients includes the combined use of them in different forms and the combined use of them in the form of a single preparation of a mixture of them.

In the case where the active ingredients are used in different preparation forms, empenthrin is used in the form of an empenthrin-containing preparation obtained by making empenthrin support on a fibrous carrier such as a nonwoven fabric or a woven fabric or paper, an inorganic carrier such as a silica gel, an alumina gel, a zeolite, a foamed perlite or a foamed glass bead or an organic carrier such as a foamed or unfoamed polymer or rubber particle, a porous molded body or a polymer gel. On the other hand, trioxane can be used in the form of a solid preparation such as a powder, a granule, a tablet or a molded body. It is preferred that the trioxane preparation and the empenthrin-containing preparation be used while arranging them continuously or at small intervals. In a closed space, both the preparations can be separated from each other to such an extent that vapors of both the chemicals can be mingled with each other. It is preferred that the trioxane preparation be packaged with a porous packaging material such as paper and the porous packaging material be impregnated with empenthrin.

In the case where both the ingredients are used in the form of a single preparation, empenthrin is sprayed or coated on a powder, granule, tablet or other molded body of trioxane to hold empentrin on the solid trioxane preparation. Furthermore, a molded body can be obtained by adding empenthrin to melted trioxane to form a homogeneous mixture, casting the homogeneous mixture into a mold or vessel and cooling and solidifying the cast mixture. Moreover various solid preparations can be formed by subjecting the above-mentioned mixture to pulverization and classification, granulation or tableting.

In the insect-proofing agent of the present invention, it is preferred that the amount of empenthrin be 0.02 to 2% by weight, especially 0.1 to 1% by weight. If the content of empenthrin is too high trioxane is lost by sublimation before empenthrin is lost by volatilization, or when they are used in the form of a mixture, empenthrin bleeds as the liquid from the packaging material. If the content of empenthrin is too low, empenthrin is lost by volatilization before trioxane is lost by sublimation, and the effect of enhancing the insecticidal action by the combined use is hardly manifested.

Of course, various addivites, for example, stabilizers such as antioxidants, ketoxims, hydrazin derivative and urea, excipients such as magnesium silicate, talc and starch, binders such as gum arabic, dextrin and CMC, carriers such as silica gel, perfumes and colorants can be added to the composite insect-proofing agent of the present invention according to need.

In order to control the sublimation speed of trioxane, it is preferred that trioxane or a mixture of trioxane and empenthrin be packaged with a synthetic resin film. In order to obtain a necessary sublimation speed of trioxane, gas-permeable openings can be formed in the synthetic resin film. A synthetic resin not damaged by the insect-proofing agent contained therein is used as the synthetic resin film. For example, there are preferably used films (plates and sheets are included; the same will apply hereinafter) of thermoplastic synthetic resins such as polyethylene, polypropylene, polyvinylidene chloride, polyvinyl alcohol, a polymethacrylate, a polyester, a polyamide and polyvinyl acetate. Furthermore, a semisynthetic resin film such as a cellophane film and a thermosetting synthetic resin film can be used. A laminate of the same kind of films or different kinds of films and a laminate comprising a film as mentioned above and a reinforcer such

4

as paper, a woven fabric or a nonwoven fabric are preferably used. In the case where a high sublimation speed of trioxane is not particularly required, an unperforated film of a polyolefin, preferably polyethylene, especially preferably low-density polyethylene, can be used as the packaging material. The thickness of the film can be a thickness ordinarily adopted for packaging, and a thickness of about 20 to about 80 $\mu$m is preferable. In practical application, the kind of the packaging material can be selected based on the ratio between empenthrin and trioxane.

We found that if an ethylene polymer film having many gas-permeable openings or a laminate film of this ethylene polymer film and a porous substrate is used as the packaging material for a composite insect-proofing agent comprising trioxane and empenthrin as the active ingredients, volatilization or sublimation of the active ingredients can be stably continued while maintaining the set ratio between the active ingredients, and a synergistic insect-proofing action by both the ingredients can be effectively attained over a long period of time. Namely, although empenthrin has a low volatilization speed, since empenthrin can permeate an ethylene polymer film, sufficient volatilization into the atmosphere can be attained. On the other hand, although trioxane has a high sublimation speed, the permeation through an ethylene polymer film is small and trioxane volatilizes into the atmosphere through gas-permeable openings formed in the film, and therefore, the volatilization speed of trioxane is effectively controlled by the openings.

As the olefin polymer, there can be used low-density polyethylene, medium-density polyethylene, high-density polyethylene, linear low-density polyethylene (LLDPE), an ethylene/propylene copolymer, an ethylene/butene-1 copolymer, an ethylene/propylene/butene-1 copolymer, an ethylene/propylene/unconjugated diene copolymer, an ion-crosslinked ethylene copolymer (ionomer), an ethylene/vinyl acetate copolymer, an ethylene/(meth)acrylic acid ester copolymer extended and unextended propylene polymer, buten polymer, and blends of two or more of the foregoing resins. In order to attain the objects of the present invention, low-density polyethylene (LDPE) or LLDPE is preferably used. The ethylene polymer film can be an unextended film (cast film) or a monoaxially or biaxially extended film.

In accordance with one embodiment of the present invention, a film having many through holes is used as the packaging material. The sublimation speed of trioxane can be adjusted by appropriately selecting the size and number of holes formed in the film layer on the surface of a synthetic resin film vessel and the total hole area (the area of whole holes per unit area of the effective surface of the synthetic resin film; the same will apply hereinafter).

The size of holes is preferably such that the effective diameter (the diameter of the hole regarded as a circle; the same will apply hereinafter) is about 0.5 to about 1.5 mm.

The number of holes is preferably 0.01 to 10 per $cm^2$ of the effective surface area of the synthetic resin film. The total hole area is generally 0.01 to 10 $mm^2/cm^2$. Incidentally, as this total hole area increases, the sublimation speed of trioxane increases.

In the present invention, the means for perforating the film layer is not particularly critical, and a customary method can be adopted. For example, there can be adopted a method in which a needle drum is pressed to the synthetic resin film vessel and a method in which the film layer is fused and perforated by using laser beams.

In accordance with another embodiment of the present invention, a filler-containing ethylene polymer film having fine open cells formed by drawing is used instead of the mechanically perforated film. It is known that a filler such as silica or calcium carbonate is incorporated in a relatively large amount (20 to 60% by weight) into an ethylene polymer resin as mentioned above, the composition is formed into a film and the film is drawn, a porous film having fine open cells (0.1 to 5 $\mu$m in diameter) can be obtained. Also in the case where this porous film is used, the volatilization speeds of trioxane and empenthrin can be matched with each other.

Use of an ethylene polymer as mentioned above as the packaging material results in attainment of the additional advantage that heat sealing can be easily performed when preparing the bags or forming the vessels.

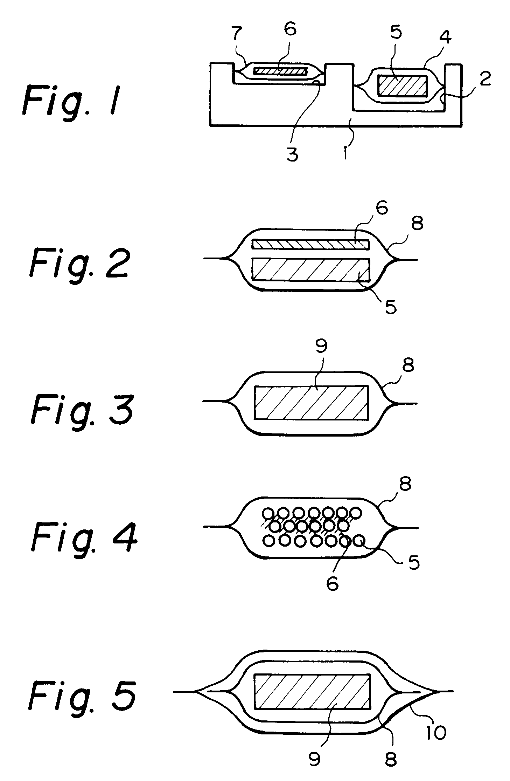

Fig. 1 shows an embodiment in which a trioxane preparation and an empenthrin-containing preparation are used in the form of different preparations in different packages. A trioxane preparation-containing portion 2 and an empenthrin preparation-containing portion 3 are formed on a support 1 formed of a carton paper or plastic material. A solid trioxane preparation 5 packaged with a porous packaging film 4 is containing in the containing portion 2, and an empenthrin preparation 6 comprising a porous carrier impregnated with empenthrin, which is packaged with a gas-permeable film 7 if necessary, is contained in the containing portion 3. When the package shown in Fig. 1 is placed in a cloth cabinet or a drawer, the insecticidal action is manifested.

Fig. 2 shows an embodiment in which the trioxane preparation 5 and the empenthrin-containing preparation 6 are contained in different preparations in a single packaging material 8. As the packaging

EP 0 387 078 B1

material 8, an ethylene polymer having gas-permeable openings or a laminate of this polymer film and a porous substrate (such as paper or a nonwoven fabric) is used.

Fig. 3 shows an embodiment in which a tablet 9 of a homogeneous mixture of trioxane and empenthrin is packaged with the above-mentioned porous film packaging material 8, and Fig. 4 shows an embodiment in which a composite insect-proofing agent comprising a powder or granule 5 of trioxane and an empentrin liquid preparation 6 held in the surface or grain boundary of the powder or granule 5 is packaged with the porous film packaging material 8.

The insect-proofing agent package of the present invention is supplied to consumers in the double-packaged state, that is, in the state where the outer side of the porous packaging material is packaged with a gas-impermeable packaging material. Fig. 5 shows an embodiment in which the package shown in Fig. 3 is further packaged with a gas-impermeable packaging material 10. As the gas-impermeable packaging material, there can be mentioned a transparent packaging material composed of a gas barrier resin such as an ethylene/vinyl alcohol copolymer or a vinylidene chloride copolymer and an opaque packaging material comprising an intermediate layer of an aluminum foil and films of a resin as mentioned above arranged on both the sides of the intermediate layer, it will be obvious to experts in the art that the package shown in Fig. 1, 2 or 4 can be double-packaged instead of the package shown in Fig. 3.

According to the insect proofing method of the present invention, trioxane and empenthrin are made co-present in an atmosphere where an insect to be controlled is present. According to the method of the present invention, trioxane is made present at a concentration of 0.3 to 10 mg/$\ell$, preferably 1 to 6 mg/$\ell$, in the above-mentioned atmosphere and empenthrin is made present at a concentration of 0.03 to 1 $\mu$g/$\ell$, preferably 0.1 to 0.6 $\mu$g/$\ell$, in the above-mentioned atmosphere.

The amount of the effective ingredients in the insect-proofing agent package of the present invention depends on the application place and the available period, but in general, when the insect-proofing agent package is used during a period of 120 to 180 days, the amount of the effective ingredients is preferably 20 to 100g.

The fact that a polyethylene film has a much higher empenthrin vapor permeability than other packaging materials is proved by the following Experiment 1.

Experiment 1

Each of bags having a size of 4.5 cm x 5.5 cm, which were composed of low-density polyethylene (referred to as "PE" hereinafter) having a thickness of 0.05 mm, a polyester (PET) film laminated with polyethylene, a nylon (NY) film laminated with polyethylene and a drawn film of polypropylene (PP) laminated with undrawn polypropylene, respectively, was charged with a filter paper having a size of 4 cm x 5 cm, which was impregnated with 0.2 g of empenthrin. The opening of the bag was heat-sealed and the sealed bag was allowed to stand still in a room maintained at a temperature of 35 ± 1°C. For comparison, the operation was conducted in the same manner except that a filter paper having a size of 4 cm x 5 cm, which was impregnated with empenthrin, was not charged in a bag. After 90 days, the weight decrease was measured. The obtained results are shown in Table 1.

Table 1

| Packaging Material | Weight Decrease (mg) |
|---|---|
| PE | 135 |
| PET | 8 |
| NY | 20 |
| PP | 30 |
| unpackaged | 135 |

The fact that the permeability of trioxane through a polyethylene film is much lower than those of other subliming substances even though the saturated vapor concentration of trioxane is much higher is proved by the following Experiment 2.

A bag having a size of 7 cm x 5 cm, which was formed of a low-density polyethylene film having a thickness of 0.04 mm, was charged with 2.0 g of a powdery sublimable substance shown below and the opening of the bag was heat-sealed. Then, the bag was hung in a room maintained at a temperature of 25 ± 1°C. After 24 hours, the weight decrease was measured. The obtained results are shown in Table 2. For reference, the saturated vapor concentration of each sublimable substance at 25°C is shown in Table 2.

6

Table 2

| Chemical | Saturated Vapor Concentration (mg/ℓ) | Weight Decrease (mg) |
|---|---|---|
| trioxane | 61.6 | 62 |
| p-dichlorobenzene | 7.9 | 758 |
| naphthalene | 0.6 | 95 |
| (d,ℓ)-camphor | 1.6 | 24 |

The present invention will now be described in detail with reference to the following examples that by no means limit the scope of the invention.

Example 1

A rectangular bag having a size of 10 cm x 6 cm, which was formed of a laminate film of Japanese paper (the base weight was 20 g/m²) and a polyethylene film (the thickness was 30 μm), was charged with a mixture of 30 g of trioxane melted at 65°C and 0.25 g of empenthrin and the opening of the bag was sealed. The bag was interposed between two stainless steel plates and was cooled to give a flat moulded solid. Then, 6 holes were formed in the film layer by using a needle drum having many needles having a diameter of 0.5 mm, which were implanted on the periphery of the drum, whereby a package of a trioxane/empenthrin mixture was obtained.

Two packages of the trioxane/empenthrin mixture were prepared according to the above-mentioned procedures.

In the central portion of a clothes box made of polypropylene, which had an inner volume of 50 ℓ, the above-mentioned two packages of the trioxane/empenthrin mixture were placed at positions 5 cm above the bottom face so that the packages were separated from each other by 40 cm. Three net cages having a diameter of 3 cm, in each of which ten 40-days-old larvae of the clothes moth Tinea pellionella (Linnaeus) (30 mg/10 larvae) and a square woven woollen fabric having a side of 3 cm (about 100 mg) were charged, were placed between two packages.

The cloth box was allowed to stand still in a room maintained at 23°C separated by a polypropylene film.

After 10 days, air in the clothes box was sampled and the trioxane and empenthrin concentrations were measured by the gas chromatography, and the numbers of the living and dead moth larvae and the feeding damage quantity of the wool woven fabric were examined.

Furthermore, in an untreated control section, the experiment was carried out in the same manner without using any chemical.

The obtained results were evaluated based on the insect-killing ratio and the insect damage ratio.

Namely, the insect-killing ratio X (%) was calculated according to the following formula:

$$X = \frac{(\text{death ratio in chemical-treated section})}{(\text{death ratio in untreated control section})}$$

The insect damage ratio Y (%) was calculated according to the following formula:

$$Y = \frac{(\text{feeding damage quantity in chemical-treated reaction})}{(\text{feeding damage quantity in untreated control section})} \times 100$$

EP 0 387 078 B1

The death ratio was calculated according to the following formula:

$$\text{Death ratio} = \frac{(\text{number of dead insects})}{(\text{number of tested insects})} \times 100$$

Incidentally, no insects were killed in the untreated control section.

Comparative Example 1

Two packages were prepared in the same manner as described in Example 1 except that trioxane alone was used instead of the trioxane/empenthrin mixture, and the insect control test was carried out by using these packages in the same manner as described in Example 1.

Comparative Example 2

A rectangular filter paper having a size of 10 cm x 6 cm was uniformly impregnated with 0.25 g of empenthrin to obtain an empenthrin-impregnated filter paper.

Two empenthrin-impregnated filter papers were prepared according to the above-mentioned procedures, and the insect control test was carried out by using these filter papers instead of the package of the trioxane/empenthrin mixture in the same manner as described in Example 1.

The results obtained in Example 1 and Comparative Examples 1 and 2 are shown in Table 3.

Table 3

|  | Trioxane Concentratration (mg/ℓ) | Empenthrin Concentratration (μg/ℓ) | Insect-Killing Ratio (%) | Insect Damage Ratio (%) |
|---|---|---|---|---|
| Example 1 | 2.5 | 0.3 | 63 | 10 |
| Comparative Example 1 | 2.5 | - | 40 | 23 |
| Comparative Example 2 | - | 0.3 | 17 | 14 |

Example 2

A square bag of a laminate film having a side of 8 cm, which was composed of a polyester film (30 μm in thickness) and a polyethylene film (15 μm in thickness) and in which 44 holes were formed by using a needle drum having a needle diameter of 0.5 mm, was filled with 30 g of granular trioxane having a particle size of 9 to 16 mesh to obtain a trioxane package. Separately, 0.1 g of empenthrin was uniformly impregnated on a rectangular filter paper having a size of 8 cm x 5 cm to obtain an empenthrin-impregnated filter paper.

In a central portion of a clothes box made of polypropylene having an inner volume of 50 ℓ, the above-mentioned trioxane package and empenthrin-impregnated filter paper were arranged in parallel and in contiguity each other at a position 5 cm above the bottom face, and five net cages having a diameter of 3 cm, in each of which ten 4-days-old larvae of the clothes moth (35 mg/10 larvae) and a square woven wool fabric (about 100 mg) having a side of 3 cm were charged, were fixed at a position 20 cm apart from the package and filter paper. Air in the dress box was sampled and the trioxane and empenthrin concentrations were measured by the gas chromatography.

The clothes box was allowed to stand still in a room maintained at a temperature of 23°C separated by a polypropylene film.

After 10 days, the numbers of the living and dead larvae of the clothes moth and the insect damage quantity of the woolen fabric were examined. Furthermore, in an untreated control section, the experiment was carried out in the same manner without using any chemical.

The obtained results were evaluated based on the insect-killing ratio and the insectival damage ratio in the same manner as described in Example 1. Incidentally, no larvae were dead in the untreated control section.

8

## Comparative Example 3

The insect control test was carried out in the same manner as described in Example 2 except that the empenthrin-impregnated filter paper was not used but the trioxane-impregnated filter paper alone was used.

## Comparative Example 4

The insect control test was carried out in the same manner as described in Example 2 except that the trioxane package was not used but the empenthrin-impregnated filter paper alone was used.

## Comparative Example 5

A package of 2,4,6-triisopropyl-1,3,5-trioxane was prepared in the same manner as described in Example 2 except that 2,4,6-triisopropyl-1,3,5-trioxane was used instead of trioxane. By using this package and the empenthrin-impregnated filter paper the insect control test was carried out in the same manner as described in Example 2.

The results obtained in Example 2 and Comparative Examples 3, 4 and 5 are shown in Table 4.

Table 4

|  | Trioxane Concentratration (mg/ℓ) | Empenthrin Concentratration (μg/ℓ) | Insect-Killing Ratio (%) | Insect Damage Ratio (%) |
|---|---|---|---|---|
| Example 2 | 3.8 | 0.2 | 80 | 10 |
| Comparative Example 3 | 3.8 | - | 40 | 25 |
| Comparative Example 4 | - | 0.2 | 35 | 50 |
| Comparative Example 5 | - | 0.2 | 35 | 50 |

## Example 3

A square bag composed of a laminate film of Japanese paper (20 g/m$^2$) and a polyethylene film (30 μm in thickness) having a side of 8 cm, in which 8 holes were formed by using a needle drum having a needle diameter of 0.5 mm, was filled with 25 g of granular trioxane having a particle size of 9 to 16 mesh to obtain a trioxane package.

A rectangular filter paper having a size of 5 cm x 4 cm, which was uniformly impregnated with 0.1 g of empenthrin, was packaged with a laminate film having a size of 6 cm x 5 cm, which was composed of Japanese paper and a polyethylene film similar to hereinbefore, to obtain an empenthrin package. The trioxane package and empenthrin package were placed contigously to each other in an thermostatic chamber tank maintained at 30°C. The interior of the tank was ventilated with nitrogen gas.

The residual amounts of trioxane and empenthrin left after the lapse of a certain period are shown in Table 5. At the standing time of 80 days, trioxane in the trioxane package had been lost by sublimation, and empenthrin in the empenthrin package had been substantially lost by volatilization.

Table 5

| Standing Time (days) | Residual Amount (g) of Trioxane | Residual Amount (g) of Empenthrin |
|---|---|---|
| 0 | 25.00 | 0.10 |
| 60 | 6.08 | 0.02 |
| 80 | 0.00 | 0.01 |

Example 4

A square bag of a laminate film comprising Japanese paper (20 g/m$^2$) and a polyethylene film (30 $\mu$m in thickness) having a side of 8 cm, in which 60 holes were formed by a needle plate having a needle diameter of 0.5 mm, was filled with 20 g of granular-trioxane having a particle size of 9 to 16 mesh. An empenthrin-impregnated paper obtained by impregnating 0.05 g of empenthrin uniformly on a rectangular filter paper having a size of 7 cm x 5 cm was inserted in a space between the granular trioxane and the laminate film and the opening of the bag was heat-sealed, whereby an insect-proofing agent package was obtained. The effective area except the area of the sealed portion was 8 cm x 6 cm.

Two insect-proofing agent packages were prepared according to the above-mentioned procedures.

In a central portion of a cloth box made of polypropylene having an inner volume of 50 ℓ, the two insect-proofing agent packages were placed at a position 5 cm apart from the bottom face so that the packages were separated by 40 cm from each other. Three net cages having a diameter of 3 cm, in each of which ten 40-days-old larvae of the clothes moth (37 mg/10 larvae) and a square wool woven fabric (about 100 mg) having a side of 3 cm were fixed between the two packages.

This clothes box was allowed to stand still in a room maintained at a temperature of 23 to 25°C and a relative humidity of 60 to 70%.

After 10 days, the numbers of living and dead larvae and the insect damage quantity of the woolen fabrics were examined. In an untreated control section, the test was carried out in the same manner without using any chemical.

The obtained results were expressed by the insect-killing ratio and the insect damage ratio. Incidentally, no larvae were dead in the untreated control section.

The obtained results are shown in Table 6.

Comparative Example 6

Two trioxane packages were prepared in the same manner as described in Example 4 except that the empenthrin-impregnated filter paper was not used and the granular trioxane alone was used. The insect control test was carried out in the same manner as described in Example 4 by using the obtained trioxane packages. The obtained results are shown in Table 6.

Comparative Example 7

Two empenthrin filter paper packages were obtained in the same manner as described in Example 4 except that trioxane was not used and the empenthrin-impregnated filter paper alone was used. The insect control test was carried out in the same manner as described in Example 4 by using the obtained packages. The obtained results are shown in Table 6.

Table 6

| | Insect-Killing Ratio (%) | Insect Damage Ratio (%) |
|---|---|---|
| Example 2 | 97 | 15 |
| Comparative Example 3 | 70 | 19 |
| Comparative Example 4 | 23 | 53 |

Example 5

A rectangular bag having a size of 9 cm x 5 cm, which was formed by pasting Japanese paper sheets, was filled with 25 g of granular trioxane having a size of 9 to 16 mesh, and the bag was sealed. Then, 0.05 g of empenthrin was uniformly coated on the Japanese paper bag. Then, the bag was filled in a bag composed of an unperforated low-density polyethylene film haivng a thickness of 20 $\mu$m, and the film bag was heat-sealed to obtain a packaged insect-proofing agent. The effective area except the area of the sealed portion was a rectangular area of 10 cm x 6 cm.

The packaged insect-proofing agent was placed at the center of a dress box having an inner volume of 50 at a position 5 cm apart from the bottom surface.

10

The dress box was allowed to stand still in a room maintained at a temperature of 22 to 23°C and a relative humidity of 50 to 60%.

After 10 days, air in the dress box was sampled and analyzed by the gas chromatography. It was found that the trioxane concentration was 2.5 mg/ℓ and the empenthrin concentration was 0.3 μg/ℓ.

## Claims

1. An insect-proofing product comprising trioxane and empenthrin, which product releases a synergistic mixture of trioxane and empenthrin vapours.

2. A product according to claim 1, wherein the empenthrin is present in an amount of from 0.02 to 2% by weight based on the weight of the trioxane.

3. A product according to claim 2, wherein the empenthrin is present in an amount of from 0.1 to 1% by weight based on the weight of the trioxane.

4. A product according to any one of claims 1 to 3, wherein the trioxane and the empenthrin are present separately in a single package.

5. A product according to claim 4, comprising trioxane in the form of a powder, granules, or molded body such as a tablet, and a porous carrier impregnated with empenthrin.

6. A product according to any one of claims 1 to 3, wherein the trioxane and the empenthrin are present in a single preparation.

7. A product according to claim 6, which comprises a powder, granules or molded body such as a tablet, of a homogeneous mixture of the trioxane and the empenthrin.

8. A product according to claim 6, which comprises a powder or granules of trioxane, and empenthrin in the grain boundaries of the powder or granules.

9. An insect-proofing package comprising a packaging material comprising a gas-permeable plastic polymer film or a laminate of the polymer film with a porous substrate and a preparation as defined in any one of the preceding claims contained within the package.

10. A package according to claim 9, wherein the plastic polymer film has perforations.

11. A package according to claim 10, wherein the plastic polymer film is a polyethylene film.

12. A package according to claim 10 or 11 wherein the effective diameter of the holes in the plastic polymer film is from 0.5 to 1.5mm.

13. A package according to any one of claims 10 to 12 wherein the number of holes in the plastic film is from 0.1 to 10 per $cm^2$ of the effective surface of the packaging material.

14. A package according to any one of claims 10 to 12, wherein the total hole area in the plastic polymer film is from 0.01 to $10mm^2$ per $cm^2$ of the surface area of the packaging material.

15. A package according to claim 9, wherein the plastic polymer film is a non-perforated polyolefin film.

16. A package according to claim 15, wherein the polyolefin film is a polyethylene film.

17. A package according to claim 10, wherein the plastic polymer film is a filler-containing extended plastic polymer film having fine open cells formed by extension.

18. A package according to any one of claims 10 to 17 which is further packaged with a substantially gas-impermeable film or a laminate thereof with an aluminium foil.

**19.** A method of controlling insects comprising releasing trioxane and empenthrin vapours into an atmosphere.

**20.** A method according to claim 19, wherein the trioxane and the empenthrin are present in the atmosphere in concentrations of from 0.3 to 10 mg/(and from 0.03 to 1 $\mu$g/) respectively.

**21.** A method according to claim 19 wherein the trioxane and the empenthrin are present in the atmosphere in concentrations of from 1 to 6 mg/(and from 0.1 to 0.6 $\mu$g/) respectively.

**22.** Use of trioxane and empenthrin in an insect control method.

**23.** A process for preparing a product as defined in claim 1 which comprises incorporating the trioxane and the empenthrin in the product.

**Patentansprüche**

**1.** Insektenschutzprodukt, das Trioxan und Empenthrin umfaßt, wobei das Produkt ein synergistisches Gemisch aus Trioxan- und Empenthrindämpfen freisetzt.

**2.** Produkt nach Anspruch 1, worin das Empenthrin in einer Menge von 0,02 bis 2 Gewichtsprozent basierend auf dem Gewicht des Trioxans vorkommt.

**3.** Produkt nach Anspruch 2, worin das Empenthrin in einer Menge von 0,1 bis 1 Gewichtsprozent basierend auf dem Gewicht des Trioxans vorkommt.

**4.** Produkt nach einem der Ansprüche 1 bis 3, worin das Trioxan und das Empenthrin getrennt in einer einzelnen Packung vorkommen.

**5.** Produkt nach Anspruch 4, das Trioxan in Form eines Pulvers, Granula oder eines gepreßten Körpers, wie einer Tablette, und einen porösen Träger umfaßt, der mit Empenthrin imprägniert ist.

**6.** Produkt nach einem der Ansprüche 1 bis 3, worin das Trioxan und das Empenthrin in einer einzelnen Präparation vorkommen.

**7.** Produkt nach Anspruch 6, das ein Pulver, Granula oder einen gepreßten Körper, wie eine Tablette, einer homogenen Mischung des Trioxans und des Empenthrins umfaßt.

**8.** Produkt nach Anspruch 6, das ein Pulver oder Granula aus Trioxan umfaßt, und Empenthrin in den Korngrenzen des Pulvers oder der Granula.

**9.** Insektenschutzpackung, die ein Packungsmaterial umfaßt, das einen gasdurchlässigen Plastikpolymerfilm oder ein Laminat des Polymerfilms mit einem porösen Substrat und eine in der Packung enthaltene Präparation nach einem der vorangehenden Ansprüche umfaßt.

**10.** Packung nach Anspruch 9, worin der Plastikpolymerfilm Perforationen aufweist.

**11.** Packung nach Anspruch 10, worin der Plastikpolymerfilm ein Polyethylenfilm ist.

**12.** Packung nach Anspruch 10 oder 11, worin der wirksame Durchmesser der Löcher im Plastikpolymerfilm 0,5 bis 1,5 mm beträgt.

**13.** Packung nach einem der Ansprüche 10 bis 12, worin die Anzahl der Löcher im Plastikfilm 0,1 bis 10 pro cm$^2$ der wirksamen Oberfläche des Packungsmaterials beträgt.

**14.** Packung nach einem der Ansprüche 10 bis 12, worin die gesamte Löcherfläche im Plastikpolymerfilm 0,01 bis 10 mm$^2$ pro cm$^2$ der Oberfläche des Packungsmaterials beträgt.

**15.** Packung nach Anspruch 9, worin der Plastikpolymerfilm ein nicht-perforierter Polyolefinfilm ist.

**16.** Packung nach Anspruch 15, worin der Polyolefinfilm ein Polyethylenfilm ist.

**17.** Packung nach Anspruch 10, worin der Plastikpolymerfilm ein Füllstoff enthaltender gestreckter Plastikpolymerfilm ist, der feine offene Zellen aufweist, die durch die Ausdehnung gebildet wurden.

**18.** Packung nach einem der Ansprüche 10 bis 17, die ferner mit einem im wesentlichen gasundurchlässigen Film oder einem Laminat hiervon mit einer Aluminiumfolie verpackt ist.

**19.** Verfahren zur Insektenkontrolle, das die Freisetzung von Trioxan- und Empenthrindämpfen in eine Atmosphäre umfaßt.

**20.** Verfahren nach Anspruch 19, worin das Trioxan und das Empenthrin in der Atmosphäre in Konzentrationen von jeweils 0,3 bis 10 mg/l (und von 0,03 bis 1 $\mu$g/l) vorkommen.

**21.** Verfahren nach Anspruch 19, worin das Trioxan und das Empenthrin in der Atmosphäre in Konzentrationen von jeweils 1 bis 6 mg/l (und von 0,1 bis 0,6 $\mu$g/l) vorkommen.

**22.** Verwendung von Trioxan und Empenthrin als Insektenkontrollverfahren.

**23.** Verfahren zur Herstellung eines Produkts nach Anspruch 1, das die Einarbeitung des Trioxans und des Empenthrins in das Produkt umfaßt.

**Revendications**

**1.** Produit conférant une résistance aux insectes, contenant du trioxane et de l'empenthrine, lequel produit libère un mélange synergique de vapeurs de trioxane et d'empenthrine.

**2.** Produit conforme à la revendication 1 dans lequel l'empenthrine est présente à raison de 0,02 à 2 % en poids par rapport au poids de trioxane.

**3.** Produit conforme à la revendication 2 dans lequel l'empenthrine est présente à raison de 0,1 à 1 % en poids par rapport au poids de trioxane.

**4.** Produit conforme à une quelconque des revendications 1 à 3, dans lequel le trioxane et l'empenthrine sont présents séparément dans un seul emballage.

**5.** Produit conforme à la revendication 4 contenant du trioxane sous forme d'une poudre, de granules ou sous forme d'un corps moulé tel qu'un comprimé, et un support poreux imprégné d'empenthrine.

**6.** Produit conforme à une quelconque des revendications 1 à 3 dans lequel le trioxane et l'empenthrine sont présents dans une seule préparation.

**7.** Produit conforme à la revendication 6 comprenant une poudre, des granulés ou un corps moulé tel qu'un comprimé, d'un mélange homogène de trioxane et d'empenthrine

**8.** Produit conforme à la revendication 6 comprenant une poudre ou des granulés de trioxane et, à la surface des particules de poudre ou des granulés, de l'empenthrine.

**9.** Emballage conférant une résistance contre les insectes, contenant un matériau d'emballage constitué d'un film polymère plastique perméable aux gaz ou d'un stratifié du film polymère avec un substrat poreux et d'une préparation définie dans une quelconque des revendications précédentes contenue dans l'emballage.

**10.** Emballage conforme à la revendication 9 dans lequel le film polymère plastique a des perforations.

**11.** Emballage conforme à la revendication 10 dans lequel le film polymère plastique est un film de polyéthylène.

13

**12.** Emballage conforme à la revendication 10 ou 11 dans lequel le diamètre efficace des trous dans le film plastique polymère est compris entre 0,5 et 1,5 mm.

**13.** Emballage conforme à une des revendications 10 à 12 dans lequel le nombre de trous dans le film plastique polymère est compris entre 0,1 et 10 par cm$^2$ de la surface efficace du matériau d'emballage.

**14.** Emballage conforme à une quelconque des revendications 10 à 12 dans lequel l'aire totale des trous dans le film plastique polymère est comprise entre 0,01 et 10 mm$^2$ par cm$^2$ de la surface du matériau d'emballage.

**15.** Emballage conforme à la revendication 9 dans lequel le film plastique polymère est un film de polyoléfine non perforé.

**16.** Emballage conforme à la revendication 15 dans lequel le film de polyoléfine est un film de polyéthylène.

**17.** Emballage conforme à la revendication 10 dans lequel le film plastique polymère est un film plastique polymère étiré contenant des charges et ayant de fines cellules ouvertes formées par l'étirage.

**18.** Emballage conforme à une quelconque des revendications 10 à 17 qui est en outre emballé dans un film quasi imperméable aux gaz ou par un stratifié de celui-ci sur une feuille d'aluminium.

**19.** Procédé de contrôle d'insectes comprenant la libération de vapeurs de trioxane et d'empenthrine dans l'atmosphère.

**20.** Procédé conforme à la revendication 19, dans lequel le trioxane et l'empenthrine sont présents dans l'atmosphère à des concentrations comprises respectivement entre 0,3 et 10 mg/l et entre 0,03 et 1 μg/l.

**21.** Procédé conforme à la revendication 19, dans lequel le trioxane et l'empenthrine sont présents dans l'atmosphère à des concentrations comprises respectivement entre 1 et 6 mg/l et entre 0,1 et 0,6 μg/l.

**22.** Utilisation de trioxane et d'empenthrine dans un procédé de limitation d'insectes.

**23.** Procédé de préparation d'un produit défini dans la revendication 1, consistant à incorporer du trioxane et de l'empenthrine dans le produit.

Fig. 1

Fig. 2

Fig. 3

Fig. 4

Fig. 5